# EUROPEAN PATENT APPLICATION

(11) **EP 3 621 054 A1**
(43) Date of publication of application: **11.03.2020**
(21) Application number: 18799424.9
(22) Date of filing: 25.07.2018
(51) Int. Cl.: G09B 1/06, A63H 33/22, A63H 33/08, A63H 33/04, G09B 1/10

(54) **ASSEMBLY LEARNING TOOL USING POLYOMINOES**

(30) Priority: 18.07.2018 KR 20180083254
(71) Applicant: PACOWARE INC., 1095, Dalgubeol-daero, Dalseo-gu, Daegu 42601 (KR)
(72) Inventor: LEE, Seung Jin, Buk-gu Daegu 41450 (KR); LEE, In Gyu, Dalseo-gu Daegu 42706 (KR)
(74) Representative: HWP Intellectual Property
(86) International application number: PCT/KR2018/008410
(87) International publication number: WO 2020/017683

(57) **Abstract**

According to the present invention, disclosed is an assembled educational toy using polyomino including: a base plate 110 formed in a plate shape having a predetermined area and horizontally disposed, and having first coupling portions 112 aligned thereon to be in straight columns and rows; a block portion 120 constituted by the polyomino having a shape of a single hexahedron 121 or a shape in which a plurality of hexahedrons 121 are fastened to each other in a lateral direction, having a bottom surface provided with second coupling portions 122 fastened to the first coupling portions 112, and forming a set of blocks having various shapes while being assembled in plural on the base plate 110 by the first coupling portions 112 and the second coupling portions 122; and a guide image portion 130 having a film or plate shape having equal to or relatively smaller area than the base plate 110, seated on the base plate 110, and provided with an image I having a shape of objects including animals to guide each block portion 120 to be assembled on the base plate 110 as the shape of objects.

## Description

### [Technical Field]

The present invention relates to an assembled educational toy using polyomino. More particularly, the present invention relates to an assembled educational toy using polyomino performing assembly learning in a form which a plurality of blocks constituted by polyomino are assembled on a base plate.

### [Background Art]

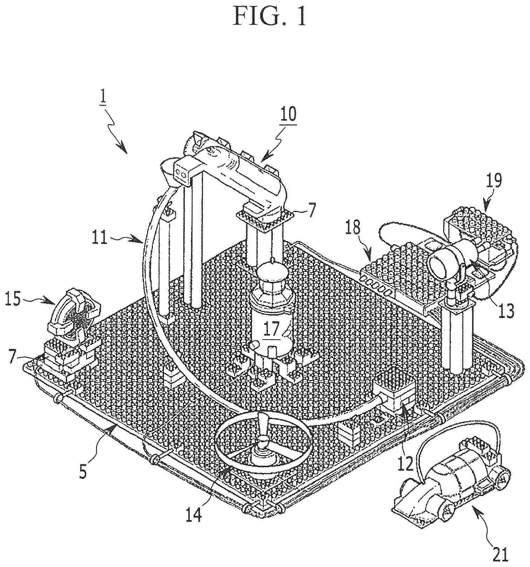

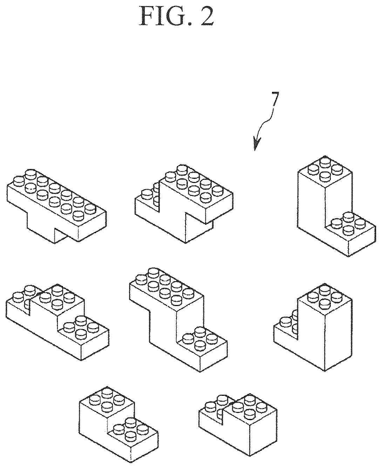

FIG. 1 shows a configuration of the conventional assembled educational toy, and FIG. 2 shows a configuration of a basic block included in the conventional assembled educational toy. Referring to FIG. 1, the conventional assembled educational toy includes a main block board 5 which is horizontally disposed in a plate shape having a predetermined area, and has an upper surface provided with a plurality of assembling protrusions protruding upwardly and a plurality of basic blocks 7 which have a variety of unshaped bricks shapes and has a lower part provided with protruding insertion grooves fitted in the assembling protrusions to be assembled into the main block board 5.

Here, the upper part of the basic block 7 is provided with protrusions having the same shape as the assembling protrusions of the main block board 5 protruding upward, such that the basic blocks 7 may be vertically assembled into each other.

In addition, as shown in FIG 1, in addition to the basic block 7, structures such as a launching pad 10, an induction pipe 11, a switchbox 12, a searchlight 13, a rotor 14, a speaker 15, a control tower 17, a control box 18, a power supply box 19, and a automobile 21 are further provided to be able to provide various additional functions.

However, since the conventional assembled educational toy performs the assembly learning in such a manner that a learner demonstrates creativity and assembles the basic blocks 7 into the main block board 5 in the form of specific objects, the conventional assembled educational toy has a problem in that if a learner lacks in creativity or is not familiar with the assembled educational toy, he / she is difficult or reluctant to learn the assembly learning and thus a learning effect and interest are reduced.

### [Related Art Document]

### [Patent Document]

(Patent Document 1) UM Registration Publication No. 20-0291736 (2002. 09. 30) Block toy for enhancing creativity

### [DISCLOSURE]

### [Technical Problem]

The present invention has been made in an effort to provide an assembled educational toy using polyomino having advantages of promoting creativity and development of fine motor by performing assembly learning in a form in which a plurality of blocks are assembled on a base plate and guiding infants with little creativity to readily follow the assembly learning by providing an image designed in a shape of objects including animals on the base plate.

### [Technical Solution]

An exemplary embodiment of the present invention provides an assembled educational toy using polyomino, including: a base plate 110 formed in a plate shape having a predetermined area and horizontally disposed, and having first coupling portions 112 aligned thereon to be in columns and rows; a block portion 120 constituted by the polyomino having a shape of a single hexahedron 121 or a shape in which a plurality of hexahedrons 121 are fastened to each other in a lateral direction, having a bottom surface provided with second coupling portions 122 fastened to the first coupling portions 112, and forming a set of blocks having various shapes while being assembled in plural on the base plate 110 by the first coupling portions 112 and the second coupling portions 122; and a guide image portion 130 having a film or plate shape having equal to or relatively smaller area than the base plate 110, seated on the base plate 110, and provided with an image I having a shape of objects including animals to guide each block portion 120 to be assembled on the base plate 110 as the shape thereof.

The first coupling portion 112 may be formed in a groove recessed downwardly in a crisscross shape on an upper surface of the base plate 110, while the second coupling portion 122 may be formed in a crisscross pillar extending downwardly by a predetermined length at centers of bottom surfaces of each of the hexahedrons 121 to be inserted into and fastened with the first coupling portions 112.

The bottom surfaces of each of the hexahedrons 121 may be provided with a plurality of elastic grooves 123 which are spaced apart from each other at regular intervals along the circumference about the second coupling portion 122 and have the shape recessed upwardly.

Third coupling portion 124 formed in grooves recessed downwardly in a crisscross or square shape may be formed on the upper surfaces of each of the hexahedrons 121.

The block portion 120 may have a plurality of different colors and the image I may be formed by using each color included in the block portion 120 in the shape of objects.

The guide image portion 130 may be provided with first guidelines 132 which have a lattice shape having intervals corresponding to widths of each of the hexahedrons 121 to guide positions where each of the block portions 120 is assembled.

The guide image portion 130 may be provided with second guidelines 133 which have a shape corresponding to plane outlines of each of the block portions 120 to guide the positions where the block portions 120 having the specific polyomino shape are assembled.

The base plate 110 may include a plurality of unit plate members 111 which have a square or rectangular plate shape, are provided with the plurality of first coupling portions 112, and are formed on the upper surface thereof, and each of the unit plate members 111 may have different sides provided with each of coupling protrusions 113 and coupling grooves 114 for side coupling of other adjacent unit plate members 111 on a side circumference thereof so that each of the unit plate members 111 may be assembled in the plate shape having a predetermined area while being coupled to each other laterally.

The guide image portion 130 may have a coloring surface which can be colored with any one tool of a pencil, a colored pencil, a pastel crayon or a color pen on the upper surface thereof or is made of a material which can be colored with the above-mentioned tools.

The guide image portion 130 may have through holes 134 at positions corresponding to each first coupling portion 112, the first coupling portions 112 penetrating through and being inserted into the through holes 134 and may be made of a hard material having predetermined strength to simultaneously separate upwardly each of the block portions 120 assembled on the base plate 110 with a force lifting up the guide image portion 130.

The guide image portion 130 may be mounted with a handle 135 used when upwardly separating each of the block portions 120 from the base plate 110 mounted on one side thereof, and the through hole 134 may have the long slit shape in the direction of the one side on which the handle 135 is mounted.

The base plate 110 may be made of the light transmitting material and is provided with a pad insertion groove 116 into which a smart pad 150 for displaying the image I on the screen window by opening the circumference on one side thereof.

### [Advantageous Effects]

According to the assembled educational toy using polyomino of the present invention, firstly, the base plate 110 having a predetermined area is horizontally disposed, the plurality of first coupling portions 112 are aligned on the upper surface of the base plate 110 to be in columns and rows, the block portions 120 constituted by the polyomino having the shape of the single hexahedron 121 or the shape in which the plurality of hexahedrons 121 are fastened to each other in a lateral direction have the bottom surfaces provided with the second coupling portions 122 engaged with the first coupling portions 112, the plurality of block portions form a set of blocks having various shapes while being assembled on the base plate 110 by the first coupling portions 112 and the second coupling portions 122, and the guide image portion 130 having a film or plate shape having an area equal to or relatively smaller than the base plate 110 is seated on the upper surface of the base plate 110 and is provided with the image I having the shape of objects including animals, such that even infants who lack in creativity and are not familiar with the assembled educational toy are guided to assemble each of the block portions 120 as the shapes of objects so as to be able to readily follow the assembly learning.

Secondly, the first coupling portions 112 are formed in the grooves recessed downwardly in the crisscross or square shape on the upper surface of the base plate 110, and the second coupling portions 122 are formed in the crisscross or square pillar extending downwardly by the predetermined length at centers of bottom surfaces of each of the hexahedrons 121 to be inserted into and fastened to the first coupling portions 112, thereby facilitating the assembly and minimizing the movement of the block portion 120 in the assembled state.

Thirdly, the plurality of elastic grooves 123 which are spaced apart from each other at regular intervals along the circumference about the second coupling portion 122 and have the shape recessed upwardly are formed on the bottom surfaces of each of the hexahedrons 121, such that the second coupling portion 122 having the crisscross pillar may be inclined with respect to the body of the block portion 120 at a predetermined angle, thereby easily separating upwardly the assembled block portion 120 in the direction inclined at a predetermined angle from the base plate 110 horizontally disposed.

Fourthly, the third coupling portions 124 formed in the grooves recessed downwardly in the crisscross or square shape are formed on the upper surfaces of each of the hexahedrons 121, such that the set of blocks may have the three-dimensional shape by assembling other block portions 120 on the block portions 120 assembled on the base plate 110.

Fifthly, the block portions 120 have a plurality of different colors and the image I is formed by using each color included in the block portions 120 in the shape of objects, thereby increasing the image effect of the assembled blocks and causing more interest in the assembly learning.

Sixthly, the guide image portion 130 may be provided with the first guidelines 132 having the lattice shape having intervals corresponding to the widths of each of the hexahedrons 121 to guide the positions where each of the block portions 120 is assembled, predicting the targets of the block portions 120 having the specific shape to be assembled in an empty space, thereby controlling difficulty in the assembly learning based on whether there is the first guideline 132 or not.

Seventhly, the guide image portion 130 may be provided with the second guidelines 133, which have the shape corresponding to the plane outlines of each of the block portions 120 to guide the positions where the block portions 120 having the specific polyomino shape are assembled, to indicate the positions where each of the block portions 120 needs to be assembled as the polyomino shape, thereby more precisely controlling the difficulty in the assembly learning based on whether there is the second guideline 133 or not.

Eighthly, the base plate 110 includes the plurality of unit plate members 111, which have the square or rectangular plate shape and are provided with the plurality of first coupling portions 112, formed on the upper surface thereof, and each of the unit plate members 111 has different sides provided with each of the coupling protrusions 113 and the coupling grooves 114 for the side coupling of other adjacent unit plate members 111 on the side circumference thereof so that each of the unit plate members 111 may be assembled in the plate shape having the predetermined area while being coupled to each other laterally, thereby the shape or the area size of the base plate 110 can be determined according to the user's level or selection.

Ninthly, the guide image portion 130 has a coloring surface which can be colored with any one of tools such as a pencil, a colored pencil, a pastel crayon or a color pen on the upper surface thereof or is made of the material which can be colored with the tool to enable a learner to assemble each of the block portions 120 on the guide image portion 130 as the shape of objects are designed with his / her own hands, thereby performing the drawing learning and causing the fun and attachment of the assembly learning.

Tenthly, the guide image portion 130 has the through holes 134 at the positions corresponding to each of the images I, the first coupling portions 112 penetrating through and being inserted into the through holes 134, and is made of a hard material having predetermined strength to simultaneously separate upwardly each of the block portions 120 assembled on the base plate 110 with the force lifting up the guide image portion 130, thereby saving the learning preparation time required by separating the plurality of assembled blocks portions 120 one by one.

Eleventhly, the guide image portion 130 is mounted with the handle 135 used when each of the block portions 120 is upwardly separated from the base plate 110 mounted on one side thereof, and the through hole 134 has the long slit shape in the direction of the one side on which the handle 135 is mounted, such that all the assembled block portions 120 may be separated at a time in such a manner in which they lean back in a direction from one side toward the other side about the base plate 110.

Twelfthly, the base plate 110 is made of the light transmitting material and is provided with the pad insertion groove 116 into which the smart pad 150 for displaying the image I on the screen window by opening the circumference on one side thereof is inserted, thereby providing the images I for more various shapes of objects compared to provide the images I through the guide image portion 130 and enhancing fun and interest of the assembly learning by controlling the timing and region where the image I is displayed or by using special effects such as color and voice.

### [Description of the Drawings]

FIG. 1 is a perspective view showing a configuration of the conventional assembled educational toy.
FIG. 2 is a perspective view showing a configuration of a basic block included in the conventional assembled educational toy.
FIG. 3 is an exploded perspective view showing a configuration of an assembled educational toy using polyomino according to an exemplary embodiment of the present invention.
FIGs. 4 and 5 are perspective view showing a configuration of a block portion according to an exemplary embodiment of the present invention.
FIG. 6 is a plan view showing various shapes of polyomino of the block portion according to the exemplary embodiment of the present invention.
FIG. 7 is a plan view showing a state where a first guideline and a second guideline are displayed in a guide image portion according to the exemplary embodiment of the present invention.
FIG. 8 is a perspective view showing a state where each block portion is assembled on a base plate according to the exemplary embodiment of the present invention.
FIG. 9 is a perspective view showing a configuration the base plate according to the exemplary embodiment of the present invention is mounted in a case.
FIG. 10 is a perspective view showing a configuration of a lamp and controller is provided in the guide image portion according to the exemplary embodiment of the present invention.
FIG. 11 is a perspective view showing a configuration of displaying an image by inserting a smart pad into the guide image portion according to the exemplary embodiment of the present invention.

### [Mode for Invention]

Hereinafter, exemplary embodiments of the present invention will be described in detail with reference to the accompanying drawings. Terms and words used in the present specification and claims are not to be construed as a general or dictionary meaning, but are to be construed as meaning and concepts meeting the technical ideas of the present disclosure based on a principle that the present inventors may appropriately define the concepts of terms in order to describe their disclosures in best mode.

Therefore, since exemplary embodiments stated in the present specification and configurations shown in the accompanying drawings are only exemplary embodiments of the present invention and do not represent the spirit of the present invention, it is to be understood that various equivalents and modifications that may replace exemplary embodiments stated in the present specification and configurations shown in the accompanying drawings at a point in time at which the present invention is filed.

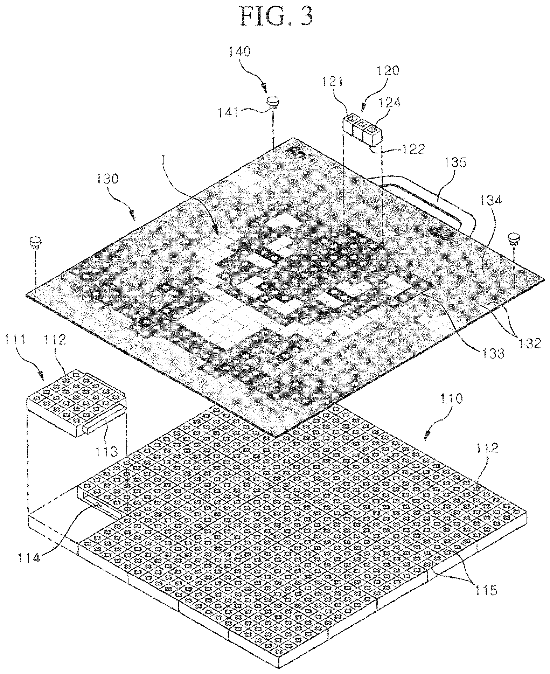

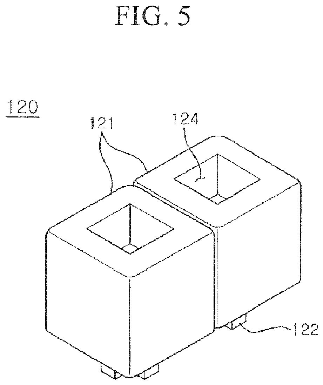

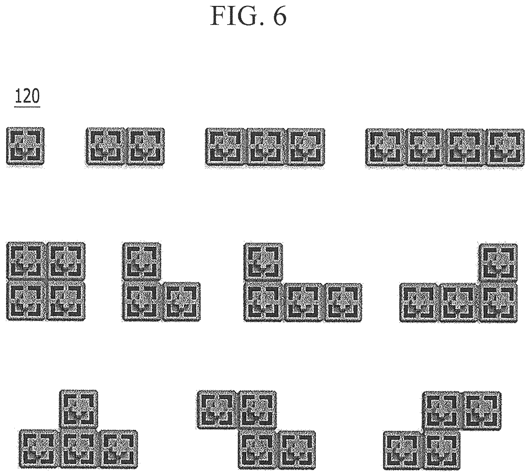

An assembled educational toy using polyomino according to an exemplary embodiment of the present invention is a learning tool which performs assembly learning in a form in which a plurality of block portions 120 constituted by polyomino are assembled on a base plate 110 to promote creativity and development of fine motor and provides an image I designed in a shape of objects including animals on the base plate 110 to guide infants with little creativity to readily follow the assembly learning, and includes the base plate 110, the block portion 120, and a guide image portion 130 as shown in FIGs. 3 to 6. Here, the image I does not necessarily include animals. It means that the image I itself may have an animal shape, as shown in the drawing, and is not limited to a type of images designed.

Firstly, the base plate 110 is a plate member for providing a space where assembly learning is performed, and has a plate shape having a predetermined area and horizontally disposed. A plurality of first coupling portions 112 are aligned on an upper surface of the base plate 110 to be in straight columns and rows.

Here, as show in FIG. 3, the base plate 110 includes a plurality of unit plate members 111 which have a square or rectangular plate shape, are provided with the plurality of first coupling portions 112, and formed on an upper surface thereof, and each unit plate members 111 has different sides provided with each of the coupling protrusions 113 and the coupling grooves 114 for side coupling of other adjacent unit plate members 111 on a side circumference thereof so that each of the unit plate members 111 may be assembled in a plate shape having a predetermined area while being coupled to each other laterally, thereby a shape or an area size of the base plate 110 is determined according to a user's level or selection.

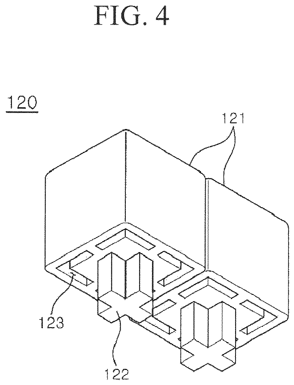

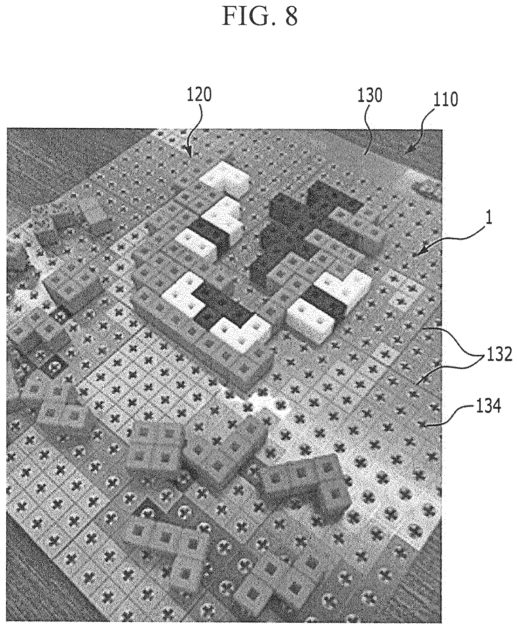

The block portion 120 is a tool used for performing the assembly learning, and as shown in FIG. 4, the block portion 120 is constituted by the polyomino having a shape of a single hexahedron 121 or a shape in which a plurality of hexahedrons 121 are fastened to each other in a lateral direction and a bottom surface thereof is provided with a second coupling portion 122 in a form in which a second coupling portion 122 is engaged with the first coupling portion 112. Accordingly, as shown in FIG. 8, the block portion 120 may form a set of blocks having various shapes while being assembled in plural on the base plate 110 by the first coupling portions 112 and the second coupling portions 122.

Secondly, the first coupling portions 112 are formed in grooves recessed downwardly in a crisscross shape on the upper surface of the base plate 110, and the second coupling portions 122 are formed in a crisscross pillar extending downwardly by a predetermined length at centers of bottom surfaces of each of the hexahedrons 121 to be inserted into and fastened to the first coupling portions 112, thereby facilitating the assembly and minimizing the movement of the block portion 120 in the assembled state.

In addition, the first coupling portion 112 is formed in a crisscross groove recessed like the second coupling portion 122 and the second coupling portion 122 has a shape of a crisscross pillar protruding like the first coupling portion 112 shown to implement the same assembling function. In addition, the first coupling portion 112 and the second coupling portion 122 may have various shapes of protrusions and grooves such as combinations of cylindrical protrusions and circular grooves, combinations of square grooves and square pillars, and combinations of straight plate-shaped protrusions and straight grooves like Lego.

Further, the first coupling portion 112 and the second coupling portion 122 may be configured by a combination of magnets with positive and negative polarities to be fastened to each other with adsorptive power by a magnetic field in addition to a combination of the protrusion with the groove. In addition, the first coupling portion 112 may be formed as a protrusion line protruding upwardly in a line shape on the base plate 110 and may be formed as a protrusion line protruding upwardly in a line shape on the base plate 110 and the second coupling portion 122 may be formed in the form in which a side part thereof is supported on each protruding line, such that the first coupling portion 112 and the second coupling portion 122 may be fastened to each other. The assembly learning may be performed in the form that each of the block portions 120 is seated on the upper surface of the base plate 110 except for the configurations of the first and second coupling portions 112 and 122.

In addition, as shown in FIG. 4, the plurality of elastic grooves 123 which are spaced apart from each other at regular intervals along the circumference about the second coupling portion 122 and have the shape recessed upwardly are formed on the bottom surfaces of each of the hexahedrons 121, such that the second coupling portion 122 having the crisscross pillar may be inclined with respect to the body of the block portion 120 at a predetermined angle, thereby the assembled block portion 120 can be easily separated upwardly in the direction inclined at a predetermined angle from the base plate 110 horizontally disposed.

The third coupling portions 124 formed in the grooves recessed downwardly in the crisscross or square shape are formed on the upper surfaces of each of the hexahedrons 121, such that the set of blocks may have the three-dimensional shape while other block portions 120 are assembled on the block portions 120 assembled on the base plate 110.

In addition, the assembly standard in which the second and third coupling portions 122 and 124 may be engaged with each other is various, so that the difficulty in the assembly learning may be controlled.

More specifically, there may be various assembly standards in which each of the second coupling portions 122 has a variety of shapes of pillars such as a crisscross pillar and a triangular pillar, and a square pillar, and each of the third coupling portions 124 has a crisscross groove, a triangular groove, and a square groove so that each of the second coupling portions 122 is engaged with each of the third coupling portions 124. When the set of three-dimensional blocks has the form in which each of the block portions 120 is stacked in a plurality of layers based on such various assembly standards, the assembly standard may be limited so that the block portions have the specific shape to be assembled for each layer.

For example, only one block portion 120 having the second coupling portion 122 having the crisscross pillar may be assembled with a first layer fastened to the base plate 110, and when the third coupling portion 124 of the block portion 120 are formed in a triangular groove shape, only the block portion 120 having the second coupling portion 122 having the triangular pillar may be assembled on a second layer, and only the block portion 120 having the second coupling portion 122 having the shape corresponding to the third coupling portion 124 of the block portion 120 assembled on the second layer may be assembled on the third layer.

The guide image portion 130 is an image member that guides a learner to assemble the block portion 120 into a specific shape of objects and has a film or plate shape having an area equal to or relatively smaller than the base plate 110 to be vertically opposite to the base plate 110 and is provided with the image I having the shape of objects including animals to guide each of the block portions 120 to be assembled as the shape of objects.

As shown in FIG. 8, the block portions 120 have a plurality of different colors and the image I is formed by coloring each color included in the block portions 120 in the shape of objects, thereby the image effect of the set of assembled blocks increases and the interest in the assembly learning can be enhanced.

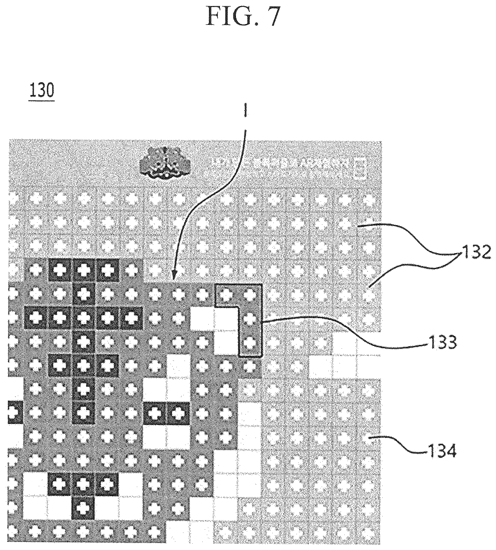

In addition, as shown in FIGs. 3, 7, and 8, the guide image portion 130 may be provided with first guidelines 132 which have intervals corresponding to the widths of each of the hexahedrons 121 and have the lattice shape to guide the positions where each of the block portions 120 is assembled to predict the targets of the block portions 120 having the specific shape to be assembled in the empty space, thereby controlling the difficulty in the assembly learning based on whether there are the first guidelines 132.

In addition, the guide image portion 130 may be provided with the second guidelines 133, which have the shape corresponding to the plane outlines of each of the block portions 120 to guide the positions where the block portions 120 having the specific polyomino shape are assembled, to indicate the positions where each of the block portions 120 needs to be assembled as the polyomino shape, thereby more elaborately controlling the difficulty in the assembly learning based on whether there are the second guidelines 133.

Here, although one second guideline 133 is shown in the drawing, the plurality of second guidelines 133 for indicating the position where each of the block portions 120 is assembled over the entire region of the image I may also be formed.

The guide image portion 130 is provided with a coloring surface that can be colored with any one of tools such as a pencil, a colored pencil, a pastel crayon or a color pen on the upper surface thereof or is made of the material which can be colored with the tool like paper to enable a learner to assemble each of the block portions 120 on the guide image portion 130 as the shape of objects designed with his/her own hands, thereby performing the drawing learning and causing the fun and attachment of the assembly learning.

In addition, the guide image portion 130 has the through hole 134 having the shape corresponding to the plane shape of the first coupling portion 112 or the second coupling portion 122 formed at a center on the square in which the first guideline 132 in a vertical direction and the first guideline 132 in a horizontal direction are formed, that is, a position corresponding to the first coupling portion 112 to accurately indicate a position where the second coupling portion 122 is inserted into the first coupling portion 112 of the base plate 110 disposed below the guide image portion 130 while the block portion 120 is assembled on the base plate 110.

The guide image portion 130 is made of a hard material having predetermined strength and may simultaneously separate upwardly each of the block portions 120 assembled with the base plate 110 with the force of lifting up the guide image portion 130. To this end, the guide image portion 130 may be made of a high-strength synthetic resin material or a metal. Therefore, it is possible to reduce a learning preparation time required while separating the plurality of assembled block portions 120 one by one.

As shown in FIG. 3, the guide image portion 130 has the handle 135 used when each of the block portions is upwardly separated from the base plate 110 mounted on one side thereof, and the through-hole 134 has the long slit shape in the direction of the one side on which the handle 135 is mounted, such that all the assembled block portions 120 may be easily separated in such a manner in which they lean back in a direction from one side toward the other side about the base plate 110.

FIG. 3 shows the structure in which the guide image portion 130 is seated on the base plate 110 and each of the block portions 120 is assembled with the base plate 110 with the guide image portion 130 interposed therebetween, but the present invention is not limited thereto. The structure in which the guide image portion 130 is provided below the base plate 110 or is inserted into the base plate 110 may also provide the image I.

To this end, the base plate 110 is made of a transparent or semi-transparent, light-transmitting material, and the guide image portion 130 may be horizontally disposed below the base plate 110 so that the image I is transmitted upwardly through the surface of the base plate 110.

In addition, a slit-shaped insertion groove may be formed in the base plate 110, and the guide image portion 130 may be inserted into the base plate 110 to be horizontally disposed through the insertion groove so as to provide the image I.

In addition, when the second coupling portion 122 of the block portion 120 does not reach the guide image portion 130 while the guide image portion 130 is disposed below the base plate 110, the through hole 134 may not be formed but be formed only in the image representing a specific object within the entire region of the guide image portion 130. That is, the through hole 134 is formed only in the area where the block portion 120 is assembled in the entire region of the guide image portion 130.

In addition, in the guide image portion 130, a center on the square shape in which the first guideline 132 in a vertical direction and the first guideline 132 in a horizontal direction are formed, that is, a position corresponding to the first coupling portion 112 may be provided with the through hole 134 having a shape corresponding to the plane shape of the first coupling portion 112 or the second coupling portion 122 to accurately indicate a position where the second coupling portion 122 is inserted into the first coupling portion 112 of the base plate 110 disposed below the guide image portion 130 while the block portion 120 is assembled on the base plate 110.

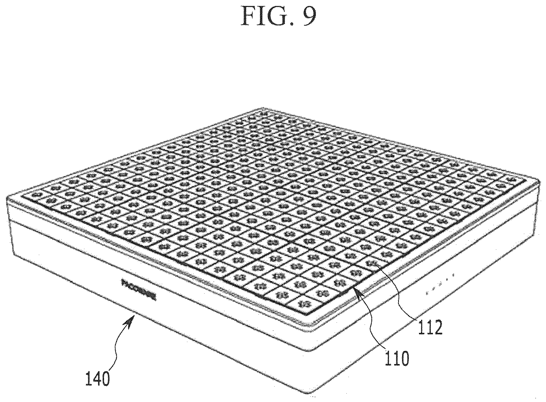

Meanwhile, as shown in FIG. 9, the base plate 110 may further include a case 140 for housing the base plate 110 thereon. In addition, the base plate 110 is made of a light-transmitting material, and the guide image portion 130 may be horizontally disposed below the base plate 110 so that the image I is transmitted upwardly through the surface of the base plate 110.

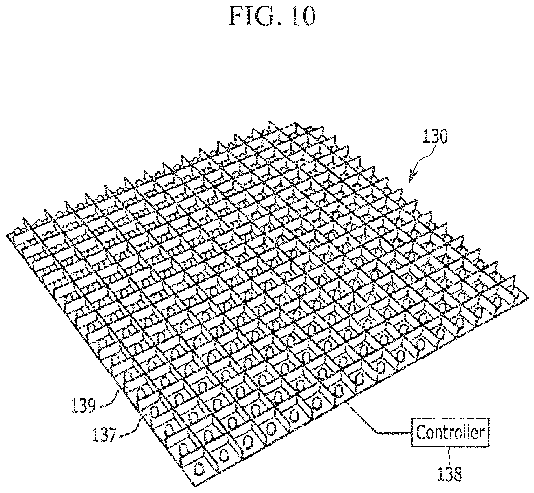

In addition, as shown in FIG. 10, the guide image portion 130 may further include a plurality of lamps 137 which are aligned to correspond to each of the first coupling portions 112 to be in straight columns and rows, are driven to be emit light according to a control signal, and diffuse display light upwardly and a controller 138 which performs a control to drive each of the lamps 137 to form the image I in which the display light diffused from each of the lamp 137 is designated.

Therefore, it is possible to provide various kinds of images I and easily switch the images I by performing a control to drive each of the lamps 137 so that the images I of various conventional objects are displayed on the guide image portion 130 without having to replace other guide image portions 130 for each image I.

In addition, as shown in FIG. 10, each of the guide image portions 130 may further include partition walls 139 which are vertically disposed between the respective lamps 137 and block the display light emitted from the lamps 137 from being incident on a side of a light emitting region of adjacent lamps 137.

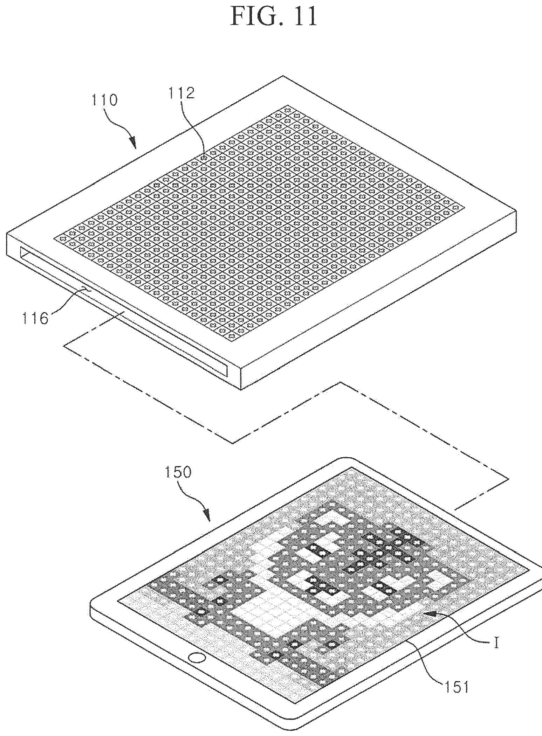

Meanwhile, as shown in FIG. 11, the assembled educational toy using polyomino according to according to the exemplary embodiment of the present invention may further include a smart pad 150 installed with the assembled educational toy application using polyomino to provide an image screen for more various images I.

In addition, the base plate 110 is made of the light-transmitting material and is provided with the pad insertion groove 116 into which the smart pad 150 for displaying the image I on the screen window is inserted by opening the circumference on one side thereof, thereby providing the images I for more various shapes of objects compared for providing the images I through the guide image portion 130 and enhancing fun and interest of the assembly learning by controlling the timing and a region where the image I is displayed or using special effects such as color and voice.

In this case, the base plate 110 is made of a conductive material, and the block portion 120 may have a conductive coating layer (not shown) formed on an outer surface thereof to detect the fitted state using the smart pad 150 while being inserted into the first coupling portion 112 of the base plate 110 in the state where it is gripped by a user, such that a learner may evaluate whether to insert the block portion 120 having the specific shape designated according to the presented image I.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### (Detailed Description of Elements)

- 110: Base plate
- 111: Unit plate member
- 112: First coupling portion
- 116: Pad insertion groove
- 120: Block portion
- 121: Regular hexahedron
- 122: Second coupling portion
- 123: Elastic groove
- 124: Third coupling portion
- 130: Guide image portion
- 132: First guideline
- 133: Second guideline
- 134: Through hole
- 135: Handle
- 137: Lamp
- 138: Controller
- 139: Partition wall
- 140: Case
- I: image

## Claims

1. An assembled educational toy using polyomino, comprising:
a base plate 110 formed in a plate shape having a predetermined area and horizontally disposed, and having first coupling portions 112 aligned thereon to be in straight columns and rows;
a block portion 120 constituted by the polyomino having a shape of a single hexahedron 121 or a shape in which a plurality of hexahedrons 121 are fastened to each other in a lateral direction, having a bottom surface provided with second coupling portions 122 fastened to the first coupling portions 112, and forming a set of blocks having various shapes while being assembled in plural on the base plate 110 by the first coupling portions 112 and the second coupling portions 122; and
a guide image portion 130 having a horizontally disposed plate shape, vertically opposite to the base plate 110, provided with an image I having a shape of objects including animals to guide each block portion 120 to be assembled on the base plate 110 as the shape of object.

2. The assembled educational toy using polyomino of claim 1, wherein the first coupling portion 112 is formed in a groove recessed downwardly in a crisscross or quadrangular shape on an upper surface of the base plate 110, and the second coupling portion 122 is formed in a crisscross or square pillar extending downwardly by a predetermined length at centers of bottom surfaces of each of the hexahedrons 121 to be inserted into and fastened with the first coupling portions 112.

3. The assembled educational toy using polyomino of claim 1, wherein the base plate 110 is made of a light-transmitting material, and the guide image portion 130 is horizontally disposed below the base plate 110 so that the image I is transmitted upwardly through a surface of the base plate 110.

4. The assembled educational toy using polyomino of claim 3, wherein the guide image portion 130 further includes a plurality of lamps 137 which are aligned to correspond to each of the first coupling portions 112 to be in straight columns and rows, are driven to be emit light according to a control signal, and diffuse display light upwardly and a controller 138 which performs a control to drive each of the lamps 137 to form the image I in which the display light diffused from each of the lamp 137 is specified.

5. The assembled educational toy using polyomino of claim 1, wherein the block portion 120 has a plurality of different colors and the image I is formed by coloring each color included in the block portion 120 in the shape of objects.

6. The assembled educational toy using polyomino of claim 1, wherein the guide image portion 130 is provided with first guidelines 132 which has a lattice shape having intervals corresponding to widths of each of the hexahedrons 121 to guide positions where each of the block portions 120 is assembled.

7. The assembled educational toy using polyomino of claim 6, wherein the guide image portion 130 is provided with second guidelines 133 which have a shape corresponding to plane outlines of each of the block portions 120 to guide the positions where the block portions 120 having the specific polyomino shape are assembled.

8. The assembled educational toy using polyomino of any one of claims 1 to 7, wherein: the base plate 110 includes a plurality of unit plate members 111 which have a square or rectangular plate shape, are provided with the plurality of first coupling portions 112, and are formed on the upper surface thereof, and each of the unit plate members 111 has different sides provided with each of the coupling protrusions 113 and the coupling grooves 114 for side coupling of other adjacent unit plate members 111 on a side circumference thereof so that each of the unit plate members 111 may be assembled in the plate shape having a predetermined area while being coupled to each other laterally.

9. The assembled educational toy using polyomino of claim 8, wherein the guide image portion has a coloring surface colored with any one tool of a pencil, a colored pencil, a pastel crayon or a color pen on the upper surface thereof or is made of a material which is colored with the tool.

10. The assembled educational toy using polyomino of claim 9, wherein the guide image portion 130 has through holes 134 at positions corresponding to each first coupling portion 112, the first coupling portions 112 penetrating through and being inserted into the through holes 134 and is made of a hard material having predetermined strength to simultaneously separate upwardly each of the block portions 120 assembled on the base plate 110 with a force lifting up the guide image portion 130.
